(19) Europäisches Patentamt
European Patent Office
Office européen des brevets

(11) **EP 2 379 459 B1**

(12) **FASCICULE DE BREVET EUROPEEN**

(45) Date de publication et mention
de la délivrance du brevet:
**20.11.2013 Bulletin 2013/47**

(51) Int Cl.:
*C03B 37/012* (2006.01)          *G02B 6/10* (2006.01)
*H01S 3/063* (2006.01)          *H01S 3/067* (2006.01)
*H01S 3/094* (2006.01)

(21) Numéro de dépôt: **10706297.8**

(22) Date de dépôt: **13.01.2010**

(86) Numéro de dépôt international:
**PCT/FR2010/050046**

(87) Numéro de publication internationale:
**WO 2010/081991 (22.07.2010 Gazette 2010/29)**

(54) **PROCEDE DE GAINAGE D'UN MILIEU LASER SOLIDE ET DISPOSITIF DE MISE EN OEUVRE**

VERFAHREN ZUR BESCHICHTUNG EINES LASERKOMPONENTS UND DAZU GEHÖRENDE VORRICHTUNG

PROCESS FOR CLADDING A LASER COMPONENT AND ASSOCIATED APPARATUS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **13.01.2009 FR 0950152**

(43) Date de publication de la demande:
**26.10.2011 Bulletin 2011/43**

(73) Titulaire: **Université Claude Bernard Lyon I 69622 Villeurbanne Cedex (FR)**

(72) Inventeurs:
• **BRENIER, Alain**
  **F-69780 Toussieu (FR)**
• **LEBBOU, Kheirreddine**
  **F- 69100 Villeurbanne (FR)**

(74) Mandataire: **Blanchard, Eugène Gilles Cabinet Beau de Loménie 51, avenue Jean Jaurès B.P. 7073 69301 Lyon Cedex 07 (FR)**

(56) Documents cités:
**EP-A- 0 959 519          DE-A1- 10 052 072
US-A- 3 656 925          US-A- 4 283 213
US-A- 4 820 321          US-A- 5 579 427
US-A1- 2006 110 122**

**Description**

Le domaine technique de l'invention concerne les guides d'ondes optiques.

Plus particulièrement, l'invention concerne le domaine des guides d'ondes utilisés dans les oscillateurs lasers ou les amplificateurs, comprenant un matériau de coeur solide dopé par des centres actifs constituant le milieu laser et au moins une gaine non dopée enveloppant ce matériau de coeur. Dans le présent fascicule, les termes « fibre laser » et « milieu laser solide gainé» seront employés de manière équivalente et indifférenciée, sans préjuger des valeurs des diamètres du coeur et de la gaine.

De telles fibres lasers sont utilisées dans les lasers à solides, bénéficiant notamment du pompage optique longitudinal avec des faisceaux émis par des diodes lasers de puissances.

Dans l'état de la technique, il est connu de réaliser de tels guides d'ondes laser par co-tirage d'un coeur monocristallin et d'une gaine de verre et au moyen d'un four à zone flottante chauffée par laser. Il s'agit de la méthode dite LHPG, pour « Laser Heated Pedestal Growth » en anglais.

Selon cette méthode, un barreau source vertical, constitué par un matériau de coeur introduit dans un tube capillaire se déplace dans un chauffage annulaire, de façon à en balayer toute la longueur.

Le chauffage est réalisé au moyen d'un faisceau laser, rendu annulaire par un jeu de réflecteurs coniques disposés en vis-à-vis suivis d'un miroir plan puis focalisé par un miroir parabolique sur une zone de focalisation annulaire du barreau.

Les fusions du tube capillaire et du matériau de coeur peuvent être observées au niveau de la zone de focalisation. Le tube capillaire, en se solidifiant, adhère au matériau de coeur qui se solidifie de même, de manière à former la gaine de la fibre laser.

Avec cette technique, l'épaisseur de la gaine déposée dépend de l'épaisseur du tube capillaire. Cependant, il n'est pas possible de contrôler de manière fiable l'épaisseur de la gaine déposée, ni de faire varier cette épaisseur en cours de dépose.

Pis, il arrive parfois, selon la nature du matériau de coeur et la puissance du laser utilisé pour la fusion du verre, qu'il y ait non seulement fusion du capillaire de verre et du matériau de coeur, mais également mélange du verre et du matériau de coeur. Les performances de la fibre laser résultante sont alors généralement inférieures à celles souhaitées.

Les documents US 2006/110122 et US 3 656 925 décrivent par ailleurs des techniques de gainage de fibres laser mettant en oeuvre des dispositifs automatisés de gainage mais qui ne permettent notamment pas un ajustement précis et variable de l'épaisseur de la gaine de la fibre sur le milieu laser gainé.

Un objet de l'invention est donc de proposer un procédé de gainage d'un milieu laser solide, tel qu'un coeur cristallin de fibre laser par exemple, permettant le contrôle de l'épaisseur de la gaine déposée.

Un autre objet de l'invention est de proposer un dispositif permettant un gainage rapide et aisé d'un milieu laser solide tout en en contrôlant de manière fiable l'épaisseur de la gaine.

A cette fin, la présente invention propose un procédé de gainage d'un milieu laser solide comportant un matériau de coeur solide actif revêtu d'une gaine et selon lequel :

a) on introduit au moins partiellement le matériau de coeur, réalisé sous forme d'une barre allongée selon un axe, dans un tube capillaire,

b) on focalise un faisceau laser sur une zone annulaire de focalisation du tube capillaire jusqu'à fondre ledit tube autour du matériau de coeur, au niveau de ladite zone de focalisation et sans fondre ledit matériau de coeur et

c) lorsque le matériau fondu capillaire adhère au matériau de coeur, on déplace ledit matériau de coeur et ledit tube capillaire selon une direction colinéaire à l'axe du matériau de coeur et à des vitesses différentes.

Le procédé de l'invention est ainsi particulièrement avantageux en ce qu'il permet, par le déplacement relatif du matériau de coeur et du capillaire de contrôler l'épaisseur de la gaine formée à partir du capillaire fondu par laser. Ce contrôle résulte en particulier selon l'invention d'une maîtrise et d'un ajustement des vitesses de déplacement relatives du matériau de coeur et du capillaire. En contrôlant ainsi l'épaisseur de gaine formée et sa variation, il est ainsi possible de produire un milieu laser solide gainé tel qu'une fibre laser capable d'absorber en son coeur une puissance de pompe par unité de longueur constante sur toute sa longueur, et ainsi d'améliorer l'effet laser obtenu à partir de cette fibre en répartissant de façon homogène tout le long du coeur la production de chaleur générée au cours du fonctionnement laser.

Selon une première caractéristique préférée du procédé de l'invention, lors de l'étape c) on maintient le matériau de coeur à une température inférieure à sa température de fusion.

Conformément à une autre caractéristique préférée de l'invention, on maintient lors de l'étape c) la focalisation du faisceau laser sur une zone annulaire située sur le matériau fondu à l'extrémité du tube capillaire.

Selon le procédé de l'invention, on contrôle de façon avantageuse l'épaisseur de la gaine déposée sur le matériau de coeur en ajustant les vitesses de déplacement du matériau de coeur et du tube capillaire de sorte que le diamètre $d_{cl}$ de la gaine soit tel que :

$$d_{cl} = \sqrt{d_{co}{}^2 + \frac{v_T}{v_{co}}\left(d_e{}^2 - d_i{}^2\right)}$$

$d_{co}$ étant le diamètre du coeur, $v_T$ étant la vitesse de déplacement du tube, $v_{co}$ étant la vitesse de déplacement du coeur, $d_e$ étant le diamètre externe du tube et $d_i$ étant le diamètre interne du tube. De manière avantageuse, on obtient par ajustement des vitesses de déplacement du coeur et du capillaire destiné à former la gaine une épaisseur de gaine souhaitée.

Toujours selon l'invention et un mode particulier de mise en oeuvre du procédé proposé on fait varier les vitesses de déplacement du matériau de coeur et du tube capillaire de manière à faire varier l'épaisseur de la gaine déposée sur le matériau de coeur.

Cette variation des vitesses de déplacement du matériau de coeur et du tube capillaire peut être de deux ordres.

Dans une première mesure, on fait varier la vitesse $v_T(z)$ de déplacement du tube capillaire en fonction de la longueur z du déplacement du matériau de coeur, suivant l'expression :

$$v_T(z) = v_T(0) \pm \sigma_{ap} N v_{co} \frac{d_{co}{}^2}{d_e{}^2 - d_i{}^2} z$$

$d_{co}$ étant le diamètre du coeur,
$d_e$ étant le diamètre externe du tube,
$d_i$ étant le diamètre interne du tube,
$\sigma_{ap}$ étant la section efficace d'absorption de la pompe du laser,
$N$ étant la concentration des centres actifs du milieu laser
$v_{co}$ étant la vitesse constante de déplacement du matériau de coeur,

de manière à faire varier l'épaisseur de la gaine déposée sur le matériau de coeur de sorte que le diamètre $d_{cl}(z)$ de la gaine soit fonction de la longueur z du déplacement du matériau de coeur telle que :

$$d_{cl}(z) = \sqrt{d_{co}{}^2 + \frac{v_T(z)}{v_{co}}\left(d_e{}^2 - d_i{}^2\right)}$$

Dans une seconde mesure, on fait varier la vitesse $v_{co}(z)$ de déplacement du matériau de coeur en fonction de la longueur z du déplacement de ce matériau de coeur, suivant l'expression :

$$v_{co}(z) = \cfrac{1}{\cfrac{1}{v_{co}(0)} \pm \sigma_{ap}\, N\, \cfrac{1}{v_T}\, \cfrac{d_{co}{}^2}{d_e{}^2 - d_i{}^2}\, z}$$

$d_{co}$ étant le diamètre du coeur,
$d_e$ étant le diamètre externe du tube,
$d_i$ étant le diamètre interne du tube
$\sigma_{ap}$ étant la section efficace d'absorption de la pompe du laser
$N$ étant la concentration des centres actifs du milieu laser
$v_T$ étant la vitesse de déplacement du tube capillaire maintenue constante de manière à faire varier l'épaisseur de la gaine déposée sur le matériau de coeur de sorte que le diamètre $d_{cl}(z)$ de la gaine soit fonction de la longueur z du déplacement du matériau de coeur telle que :

$$d_{cl}(z) = \sqrt{d_{co}{}^2 + \frac{v_T}{v_{co}(z)}\left(d_e{}^2 - d_i{}^2\right)}$$

En outre, le procédé selon l'invention peut comporter au moins l'une des caractéristiques additionnelles suivantes :

- on contrôle le déplacement horizontal relatif du matériau de coeur et du tube capillaire durant l'étape a),
- le matériau de coeur et le tube capillaire s'étendent chacun et sont déplacés l'un par rapport à l'autre selon deux axes colinéaires non coaxiaux de manière à obtenir un milieu laser solide dont le coeur est décentré par rapport à la gaine,
- on contrôle la symétrie de révolution de la zone fondue annulaire autour de l'axe du capillaire,
- on contrôle la puissance du laser de fusion du capillaire,
- on contrôle la distribution de température au voisinage de la zone chauffée,
- on réalise la fusion du capillaire et le dépôt de la gaine dans une enceinte de confinement sous atmosphère contrôlée.

Un autre objet de l'invention est de proposer un dispositif de gainage d'un milieu laser solide comportant un matériau de coeur solide actif revêtu d'une gaine permettant le contrôle de l'épaisseur de la gaine.

Selon l'invention, ce dispositif de gainage comporte un premier système de déplacement sur lequel est fixé le matériau de coeur, ledit matériau de coeur étant réalisé sous forme de barre allongée selon un axe et ledit premier système de déplacement pouvant au moins se déplacer selon une direction colinéaire à l'axe de coeur, un deuxième système de déplacement sur lequel est fixé un tube capillaire, le matériau de coeur étant au moins partiellement inséré dans le tube capillaire et ledit deuxième système de déplacement pouvant au moins se déplacer selon une direction colinéaire à l'axe de fibre. Le dispositif de l'invention comporte également un système d'ajustement des déplacements des premier et deuxième systèmes de déplacement à des vitesses différentes et variables pour contrôler et faire varier l'épaisseur de gaine déposée, ainsi qu'un système optique adapté pour focaliser un faisceau laser sur une zone annulaire de focalisation annulaire de la gaine, afin de fondre le tube capillaire autour du matériau de coeur, au niveau de ladite zone de focalisation et sans fondre ledit matériau de coeur.

Selon une première caractéristique du dispositif de l'invention, celui-ci comporte un système de refroidissement qui maintient le matériau de coeur à une température inférieure à sa température de fusion.

Toujours selon l'invention, le système optique maintient la focalisation du faisceau laser sur une zone annulaire située sur le matériau fondu à l'extrémité du tube capillaire.

Selon une variante préférée de réalisation, le système d'ajustement ajuste les vitesses de déplacement du premier et du deuxième système de déplacement conformément au procédé de l'invention précédemment défini.

Selon une variante avantageuse de réalisation, le premier système de déplacement et/ou le deuxième système de déplacement est (sont) adapté(s) pour mesurer les déplacements et contrôler les vitesses de déplacement du matériau de coeur et du tube capillaire.

Par ailleurs, le dispositif de gainage de l'invention peut comporter au moins l'une des caractéristiques suivantes :

- le premier système de déplacement et le deuxième système de déplacement est (sont) adapté(s) pour déplacer le matériau de coeur et le tube capillaire selon deux axes colinéaires non coaxiaux de manière à obtenir un matériau laser solide dont le coeur est décentré par rapport à la gaine,
- le système optique comporte un laser de type $CO_2$ émettant un faisceau laser, et au moins un dispositif optique adapté pour orienter et pour focaliser annulairement le faisceau laser sur la zone de focalisation annulaire de la gaine, le dispositif optique d'orientation et de focalisation du faisceau laser comporte un miroir parabolique orientable suivant deux axes de rotation perpendiculaires entre eux, se coupant au sommet du mirroir, et perpendiculaires à l'axe du miroir,
- le dispositif comporte un système de contrôle de la puissance du faisceau laser,
- le dispositif comporte un système de visualisation de la distribution de température au voisinage de la zone chauffée,

- le dispositif comporte une enceinte de confinement sous atmosphère contrôlée.

Diverses autres caractéristiques ressortent de la description faite ci-dessous en référence aux dessins annexés qui montrent, à titre d'exemples non limitatifs, des formes de réalisation de l'objet de l'invention.

- la Figure 1 représente schématiquement une cavité laser dans laquelle le milieu laser est formé d'une fibre laser LF comprenant un coeur solide actif C et une gaine G obtenue selon le procédé de l'invention;
- la Figure 2 représente l'étape de préparation du procédé de l'invention;
- la Figure 3 représente un dispositif selon l'invention mettant en oeuvre le procédé de l'invention pour réaliser le dépôt d'une gaine sur un matériau de coeur solide;
- la Figure 4A représente une variante de l'étape de préparation de la figure 2;
- la Figure 4B est une vue en coupe transversale d'une fibre laser obtenue par l'utilisation de la variante représentée sur la figure 4A ;
- la Figure 5 est une figure analogue à la Figure 1, représentant une fibre laser dont la gaine présente une épaisseur variable sur sa longueur.

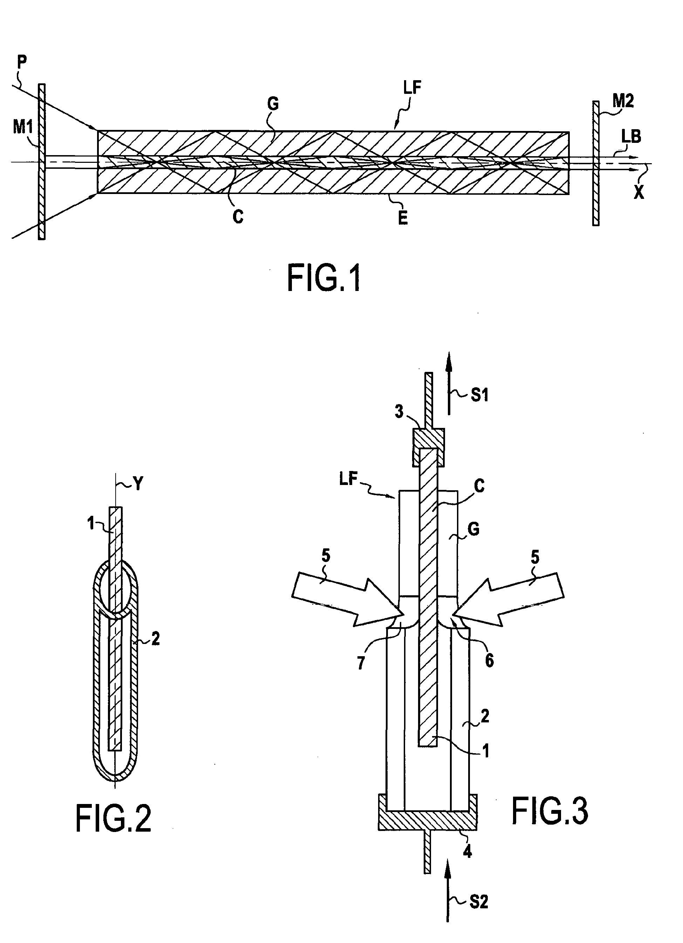

La Figure 1 représente schématiquement une cavité laser destinée à équiper un laser à fibre, et comprenant un milieu laser solide actif gainé obtenu par le procédé selon l'invention.

Bien entendu, il est clair qu'un milieu laser solide gainé obtenu par le procédé selon l'invention peut être intégré à tout type de cavité laser, et que le procédé selon l'invention ne saurait être limité à ce type d'application.

Le fonctionnement d'un laser à fibre, connu en soi, ne sera pas décrit en détail ci-après.

Selon l'exemple de réalisation illustré, ladite cavité laser comporte un premier miroir dichroïque M1 disposé en regard d'un deuxième miroir partiellement réfléchissant M2. Chaque miroir est plan ou concave et son axe coincide avec l'axe de cavité (X).

Le milieu laser solide, disposé entre le premier miroir M1 et le deuxième miroir M2, est réalisé sous la forme d'une fibre laser LF s'étendant selon l'axe de cavité (X).

La fibre laser LF comporte un coeur solide actif C revêtu d'une gaine G munie d'une paroi externe E. Le coeur solide actif C est pompé par un faisceau de pompe P qui se propage selon l'axe de cavité (X), de sorte à émettre un faisceau laser de sortie LB qui se propage également selon l'axe de cavité (X). Le faisceau de pompe P est par exemple émis par au moins une diode laser de puissance non représentée.

La gaine G permet avantageusement de guider le faisceau de pompe P sur l'ensemble de la longueur de la fibre laser LF, par exemple par réflexion totale le long de la paroi externe E, de sorte à répartir au moins partiellement l'absorption du faisceau de pompe P par le coeur solide actif C sur l'ensemble de la longueur de la fibre laser LF.

La présente invention propose un dispositif et un procédé de gainage d'un milieu laser solide permettant de maîtriser de façon fiable la formation et le dépôt de la gaine sur un milieu laser solide tel qu'un coeur cristallin de fibre laser comme décrit ci-après en référence aux Figures 2 et 3.

Le dispositif de gainage permet de réaliser une fibre laser LF à partir d'un barreau d'un matériau de coeur 1 s'étendant selon un axe au moins partiellement inséré dans un tube capillaire 2.

Le matériau de coeur 1 constitue le coeur solide actif C de la fibre laser LF et le tube capillaire 2 permet lui de réaliser la gaine G par fusion de sa matière. Le matériau de coeur 1 peut être constitué par exemple d'un barreau monocristallin dopé, d'un barreau céramique dopé ou d'un barreau de verre dopé. Le tube capillaire 2 quant à lui peut être réalisé sous la forme d'un tube de matériau vitreux, cristallin, métallique ou alliage métallique, organique non dopé.

Il est judicieux que les matériaux de coeur et du tube capillaire aient des coefficients de dilatation thermique linéaire ($K^{-1}$) proches. Un exemple de matériaux est le verre Schott SF57 pour le tube capillaire et le cristal de YAG dopé pour le coeur. Dans le cas d'un coeur et d'une gaine tous deux cristallins, il est par ailleurs préféré que les paramètres de mailles cristallines du coeur et de la gaine soient ajustés très proches. Un exemple de matériaux pour une telle réalisation est un coeur YAG dopé et un tube capillaire de YAG pur.

Le dispositif de gainage de l'invention comporte, comme représenté sur la Figure 3, un premier système de déplacement 3, sur lequel est fixé le matériau de coeur 1, et un deuxième système de déplacement 4 sur lequel est fixé le tube capillaire 2.

Le premier système de déplacement 3 est configuré pour déplacer, en l'occurrence pour tirer, le matériau de coeur 1 dans un premier sens S1 selon une direction verticale parallèle à l'axe (Y). Le deuxième système de déplacement 4, quant à lui, est adapté pour déplacer, en l'occurrence pour pousser, le tube capillaire 2 selon un deuxième sens S2 identique au premier sens S1 dans lequel est tiré le barreau de coeur 1 par le premier système de déplacement 3. Le premier système de déplacement 3 et le deuxième système de déplacement 4 comportent tous deux des moyens moteurs permettant un déplacement du barreau de coeur 1 et du tube capillaire 2 selon les sens S1, S2 respectivement à des vitesses différentes.

Les deux systèmes de déplacement 3, 4 comportent également de façon préférée des moyens de mesure et de contrôle de la distance de déplacement du matériau de coeur 1 et du tube capillaire 1 et/ou de contrôle de leur vitesse de déplacement.

Le dispositif de gainage de l'invention comporte en outre un système optique, non représenté, adapté pour émettre un faisceau laser 5, matérialisé par deux flèches pleines sur la figure 3, sur une zone de focalisation annulaire 6 préférentiellement située à une extrémité du tube capillaire 2.

Selon un mode préféré de réalisation du dispositif de l'invention, le système optique comprend un laser $CO_2$ émettant le faisceau laser 5 rendu annulaire par un jeu de réflecteurs coniques disposés en vis-à-vis et suivis d'un réflecteur plan puis focalisé par un miroir parabolique orientable sur la zone de focalisation annulaire 6. Le jeu de réflecteurs coniques et la série de miroirs constituent un dispositif optique non représenté sur les figures mais bien connu de l'homme de l'art dans le domaine des techniques LHPG par exemple. Ce dispositif optique comporte un miroir parabolique. Conformément à la présente invention, ce miroir parabolique coopère avec un dispositif d'orientation dudit miroir autour de deux axes de rotation perpendiculaires se coupant au sommet dudit miroir et tous deux perpendiculaires à l'axe du miroir. Un tel dispositif d'orientation du miroir parabolique facilite l'obtention de la symétrie de révolution de la zone fondue annulaire après emboîtement du matériau de coeur dans le tube à partir duquel est réalisé le gainage.

Le système optique du dispositif de l'invention est adapté pour initier et entretenir une fusion contrôlée du tube capillaire 2 au niveau de la zone de focalisation 6, autour du matériau de coeur 1 et sans fondre ledit matériau de coeur 1 afin de ne pas altérer la structure du coeur solide actif C de la fibre laser LF obtenue.

A cette fin, le dispositif de gainage peut comporter un système de contrôle de la puissance du faisceau laser 5 afin de contrôler le degré de fusion du tube capillaire 2 ou, dans une variante non représentée, un système de refroidissement adapté pour maintenir le matériau de coeur 1 à une température inférieure à sa température de fusion.

Afin de prévenir également une fusion accidentelle du matériau de coeur 1, il est également préférable de choisir un matériau de coeur 1 dont la température de fusion est sensiblement supérieure à la température de fusion du tube capillaire 2. Au surplus, on mesure également pendant la fusion la distribution de température au voisinage de la zone chauffée à l'aide d'une caméra thermographique.

Enfin, le dispositif de gainage comprend par ailleurs, pour éviter les perturbations physico-chimiques lors du gainage d'un milieu laser solide tel qu'un barreau d'un matériau de coeur 1 de fibre laser, une enceinte de confinement sous atmosphère contrôlée à l'intérieur de laquelle sont réalisées les opérations de gainage, conformément au procédé de gainage proposé par la présente invention qui permet de contrôler l'épaisseur de la gaine déposée sur une milieu laser solide tel qu'un barreau de coeur 1 d'une fibre laser et décrit ci-après.

Selon ce procédé, on insère au moins partiellement dans une première étape a) un barreau d'un matériau de coeur 1, dans un tube capillaire 2 comme représenté sur la figure 2. Pour ce faire, on fixe d'une part le matériau de coeur 1 sur le premier système de déplacement 3 du dispositif de gainage, et l'on fixe d'autre part le tube capillaire 2 sur le deuxième système de déplacement 4 dudit dispositif, puis on actionne les moyens moteurs des deux systèmes de déplacement 3, 4 de manière à déplacer ces derniers l'un par rapport à l'autre et à ajuster la position relative matériau de coeur 1 à l'intérieur du tube capillaire 2.

Ensuite, dans une deuxième étape b), on focalise à l'aide du système optique du dispositif le faisceau laser 5 sur une zone de focalisation annulaire 6 du tube capillaire 2 jusqu'à fondre ledit tube capillaire 2 autour du matériau de coeur 1.

La portion fondue du tube capillaire 2, appelée matériau capillaire fondu 7 dans la suite de la présente description, adhère ensuite au matériau de coeur 1, par exemple sous l'effet des forces de capillarité et de la gravité.

De manière préférentielle, la zone de focalisation annulaire 6 est située à une extrémité du tube capillaire 2 et détermine le niveau de l'interface entre le tube capillaire 2 non fondu et le matériau capillaire fondu 7.

Lors de cette seconde étape b) de focalisation du faisceau laser 5 sur la zone annulaire 6 de focalisation sur le tube capillaire 2, on veille à éviter toute fusion du matériau de coeur 1. A cet effet, on actionne le cas échéant des moyens de refroidissement dédiés du dispositif de gainage, même si la température de fusion du matériau de coeur 1 traité est supérieure à celle du tube capillaire 2. De même, on contrôle à tout instant la puissance du laser 5 par des moyens de contrôle idoines du dispositif de gainage, en s'aidant le cas échéant de l'imagerie thermographique.

Une fois mis en fusion, le matériau capillaire fondu 7 adhère au matériau de coeur 1. On actionne alors les moyens moteurs des systèmes de déplacement 3, 4 du dispositif de l'invention de manière à déplacer dans une troisième étape c) le matériau de coeur 1 et le tube capillaire 2 relativement l'un par rapport à l'autre dans les sens S1, S2 précédemment définis et tels que représentés par deux flèches sur la figure 3.

Dans l'exemple représenté sur la figure 3, la direction de déplacement du matériau de coeur 1 par le système de déplacement 3 et celle de déplacement du tube capillaire 2 par le système de déplacement 4 sont toutes deux verticales et identiques, de même que les sens de déplacement S1, S2 sont identiques. Toutefois, on peut tout à fait en cas de besoin, et comme il sera décrit par la suite, effectuer le déplacement du matériau de coeur 1 et du tube capillaire 2 selon deux directions distinctes colinéaires l'une de l'autre.

Le déplacement du matériau coeur 1 selon S1 entraîne un étirement du matériau fondu 7, ce qui entraîne sa solidification au contact du matériau de coeur 1 et la formation d'une gaine G autour de celui-ci.

Au cours du procédé, la focalisation du faisceau laser 5 est maintenue sur la zone annulaire de focalisation 6 de manière à entretenir la fusion du tube capillaire et permettre le dépôt progressif et continu de la gaine G sur le matériau de coeur 1 au fur et à mesure des déplacement relatifs dudit matériau de coeur 1 et du tube capillaire 2 par les systèmes de déplacement 3, 4 du dispositif.

Le procédé de l'invention tel que décrit ci-avant présente l'avantage de permettre le dépôt d'une gaine G sur un milieu laser solide tel que la matériau de coeur 1 de façon continue tout en contrôlant parfaitement le diamètre $d_{cl}$ de la gaine G déposée sur le matériau de coeur 1.

En effet, le procédé de l'invention permet, par l'ajustement des vitesses de déplacement du matériau de coeur 1 et du tube capillaire 2 par les systèmes de déplacement 3, 4 de choisir et contrôler le diamètre $d_{cl}$ de la gaine G déposée.

En se référant une fois encore aux figures 2 et 3, le matériau de coeur 1 est réalisé sous la forme d'un barreau de diamètre $d_{co}$, le tube capillaire 2 étant lui réalisé sous la forme d'un tube creux de diamètre intérieur $d_i$, de diamètre extérieur $d_e$. Considérant que pendant la troisième étape de dépôt de la gaine G sur le matériau de coeur 1 celui-ci est déplacé à une vitesse de coeur dite $v_{co}$ pendant que le tube capillaire 2 est lui déplacé à une vitesse de tube $v_T$ différente, et de préférence inférieure à la vitesse de coeur $v_{co}$, les inventeurs ont démontré expérimentalement, lorsque l'état stationnaire de la zone fondue est atteint, que l'épaisseur $d_{cl}$ de gaine G déposée sur le matériau de coeur 1 varie selon la relation suivante :

$$d_{cl} = \sqrt{d_{co}^{2} + \frac{v_T}{v_{co}}\left(d_e^{2} - d_i^{2}\right)}$$

Ainsi, par le procédé de gainage de l'invention il est possible de choisir le diamètre de la gaine G déposée sur un milieu laser solide et de maîtriser ce diamètre et donc l'épaisseur de la gaine G en ajustant et contrôlant plus conformément à l'équation précédente, par un paramétrage adéquat des systèmes de déplacement 3, 4 du dispositif de l'invention, et plus particulièrement les moyens moteurs de ceux-ci, les vitesses de déplacement $v_{co}$ et $v$ du matériau de coeur 1 et du tube capillaire 2.

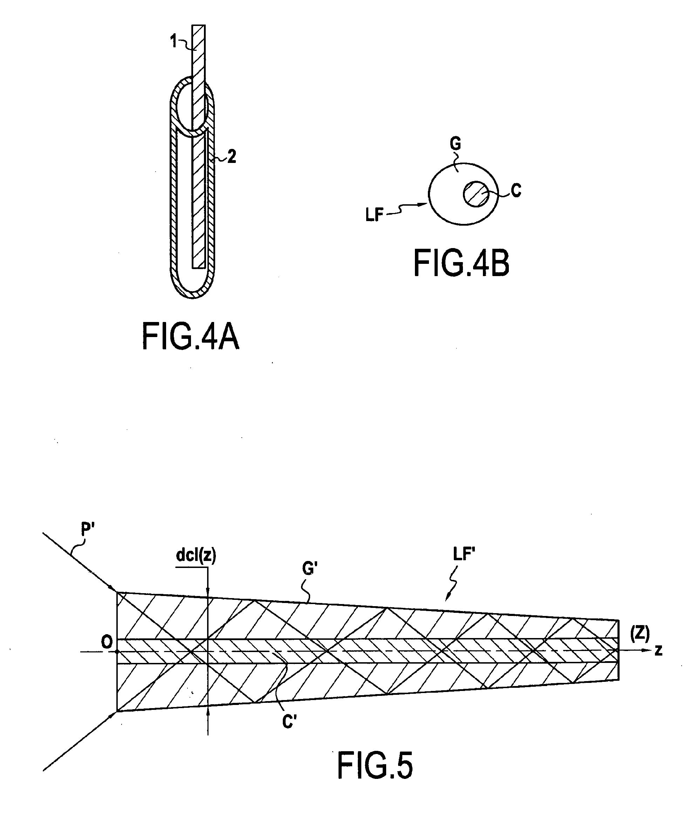

Dans une variante de réalisation du procédé de l'invention précédemment évoquée et représentée aux Figures 4A et 4B, il est possible, tout en conservant la maîtrise du diamètre de gaine déposé sur un milieu laser solide, de réaliser un gainage décentré d'un dit milieu laser solide, c'est-à-dire un gainage dans lequel la gaine n'est pas symétrique autour du milieu laser solide ou le milieu laser solide non centré dans sa gaine.

En référence aux figures 4A et 4B, il convient alors pour réaliser un tel gainage de positionner lors de la première étape du procédé de l'invention le matériau de coeur 1 de façon désaxée à l'intérieur du tube capillaire 2 puis, lors des deuxième et troisième étapes de déplacer ledit matériau de coeur 1 et le tube capillaire 2 selon deux axes verticaux colinéaires et non coaxiaux.

Ce positionnement est obtenu en adaptant le premier système de déplacement 3 et/ou le deuxième système de déplacement 4 de sorte à déplacer selon une composante horizontale le matériau de coeur 1 relativement au tube capillaire 2.

Comme représenté sur la Figure 4B, cette variante de réalisation du procédé de l'invention permet d'obtenir une fibre laser LF dont le coeur solide actif C est décentré par rapport à la gaine G.

Il est également possible conformément au procédé de gainage de l'invention et dans une forme particulière de mise en oeuvre de celui-ci de faire varier au cours du gainage, et plus particulièrement de la troisième étape c), les vitesses de déplacement du matériau de coeur 1 et du tube capillaire 2 de manière à faire varier l'épaisseur de la gaine $d_{cl}$ tout au long du milieu laser solide gainé, par exemple d'une fibre laser LF' comme représenté sur la figure 5.

La gaine G' de ladite LF' présente un diamètre $d_{cl}$ variable sur toute sa longueur. Le coeur solide actif C' de la fibre laser LF' a une section efficace d'absorption de la pompe du laser $S_{ap}$ et a une concentration $N$ des centres actifs du milieu laser.

Dans ce mode de réalisation, le coeur solide actif C' de la fibre est réalisé sous la forme d'un barreau d'un matériau de coeur de diamètre $d_{co}$ s'étendant selon un axe (Z), le tube capillaire à fondre pour réaliser la gaine G' de la fibre LF' étant réalisé sous la forme d'un tube creux de diamètre intérieur $d_i$, de diamètre extérieur $d_e$ et s'étendant également selon le même axe (Z). Le matériau de coeur est déplacé lors de l'étape c) du procédé de gainage à une vitesse de coeur $v_{co}$ tandis que le tube capillaire 2 est déplacé à une vitesse de tube $v_T$ différente de la vitesse de coeur $v_{co}$.

Selon une première variante de ce mode de réalisation particulier, on fait varier la vitesse $v_T(z)$ de déplacement du tube capillaire en fonction de la longueur $z$ du déplacement du matériau de coeur, suivant l'expression :

$$v_T(z) = v_T(0) \pm \sigma_{ap} N v_{co} \frac{d_{co}^2}{d_e^2 - d_i^2} z$$

de manière à faire varier l'épaisseur $d_{cl}$ de la gaine G' déposée sur le matériau de coeur de sorte que le diamètre $d_{cl}$ de la gaine soit fonction de la longueur $z$ du déplacement du matériau de coeur telle que :

$$d_{cl}(z) = \sqrt{d_{co}^2 + \frac{v_T(z)}{v_{co}}\left(d_e^2 - d_i^2\right)}$$

Dans une seconde variante de ce mode de réalisation particulier, on fait varier la vitesse $v_{co}(z)$ de déplacement du matériau de coeur en fonction de la longueur $z$ du déplacement du matériau de coeur, suivant l'expression :

$$v_{co}(z) = \cfrac{1}{\cfrac{1}{v_{co}(0)} \pm \sigma_{ap} N \cfrac{1}{v_T} \cfrac{d_{co}^2}{d_e^2 - d_i^2} z}$$

de manière à faire varier l'épaisseur $d_{cl}$ de la gaine G' déposée sur le matériau de coeur de sorte que le diamètre $d_{cl}$ de la gaine soit fonction de la longueur $z$ du déplacement du matériau de coeur telle que :

$$d_{cl}(z) = \sqrt{d_{co}^2 + \frac{v_T}{v_{co}(z)}\left(d_e^2 - d_i^2\right)}$$

Ces deux variantes permettent avantageusement d'obtenir un milieu laser solide gainé tel qu'une fibre laser LF' dont l'absorption par unité de longueur $\dfrac{dP'}{dz}$ de la puissance du faisceau de pompe P' est constante sur toute sa longueur $z$, c'est-à-dire qu'elle ne dépend pas de la longueur de déplacement $z$.

## Revendications

1. Procédé de gainage d'un milieu laser solide comportant un matériau de coeur solide actif (**C**)-revêtu d'une gaine (**G**), selon lequel :

   a) on introduit au moins partiellement le matériau de coeur (**1**), réalisé sous forme d'une barre allongée selon un axe de fibre, dans un tube capillaire,
   b) on focalise un faisceau laser (**5**) sur une zone annulaire de focalisation (**6**) du tube capillaire (**2**)
   c) lorsque le matériau fondu capillaire adhère au matériau de coeur (**1**), on déplace ledit matériau de coeur (**1**) et ledit tube capillaire (**2**) selon une direction colinéaire à l'axe du coeur (**1**),

   **caractérisé en ce que** :

- la focalisation de l'étape b) s'effectue jusqu'à fondre ledit tube autour du matériau de coeur (**1**), au niveau de ladite zone de focalisation (**6**) et sans fondre ledit matériau de coeur (**1**) et,
- le déplacement de l'étape c) s'effectue à des vitesses différentes.

2. Procédé de gainage d'un milieu laser solide selon la revendication 1, dans lequel à l'étape c) on maintient le matériau de coeur (**1**) à une température inférieure à sa température de fusion.

3. Procédé de gainage d'un milieu laser solide selon l'une des revendications 1 ou 2, dans lequel on maintient lors de l'étape c) la focalisation du faisceau laser (**5**) sur une zone annulaire située sur le matériau fondu à l'extrémité du tube capillaire (**2**).

4. Procédé de gainage d'un milieu laser solide selon l'une des revendications 1 à 3, dans lequel on contrôle l'épaisseur de la gaine déposée sur le matériau de coeur (**1**) en ajustant les vitesses de déplacement du matériau de coeur (**1**) et du tube capillaire de sorte que le diamètre $d_{cl}$ de la gaine soit tel que :

$$d_{cl} = \sqrt{d_{co}^{2} + \frac{v_T}{v_{co}}\left(d_{e}^{2} - d_{i}^{2}\right)}$$

$d_{co}$ étant le diamètre du coeur,
$v_T$ étant la vitesse de déplacement du tube, $v_{co}$ étant la vitesse de déplacement du coeur, $d_e$ étant le diamètre externe du tube,
$d_i$ étant le diamètre interne du tube.

5. Procédé de gainage d'un milieu laser solide selon la revendication 4, dans lequel on fait varier les vitesses de déplacement de matériau de coeur (1) et du tube capillaire (2) de manière à faire varier l'épaisseur de la gaine déposée sur le matériau de coeur (1).

6. Procédé de gainage d'un milieu laser solide selon la revendication 5, dans lequel on fait varier la vitesse $v_T(z)$ de déplacement du tube capillaire (2) en fonction de la longueur $z$ du déplacement du matériau de coeur, suivant l'expression :

$$v_T(z) = v_T(0) \pm \sigma_{ap}\, N\, v_{co}\, \frac{d_{co}^{2}}{d_{e}^{2} - d_{i}^{2}}\, z$$

$d_{co}$ étant le diamètre du coeur,
$d_e$ étant le diamètre externe du tube,
$d_i$ étant le diamètre interne du tube,

$\sigma_{ap}$ étant la section efficace d'absorption de la pompe (P) du laser,
$N$ étant la concentration des centres actifs du milieu laser
$v_{co}$ étant la vitesse constante de déplacement du matériau de coeur, de manière à faire varier l'épaisseur de la gaine déposée sur le matériau de coeur de sorte que le diamètre $d_{cl}(z)$ de la gaine soit fonction de la longueur
$z$ du déplacement du matériau de coeur (1) telle que :

$$d_{cl}(z) = \sqrt{d_{co}^{2} + \frac{v_T(z)}{v_{co}}\left(d_{e}^{2} - d_{i}^{2}\right)}$$

7. Procédé de gainage d'un milieu laser solide selon la revendication 5, dans lequel on fait varier la vitesse $v_{co}(z)$ de déplacement du matériau de coeur (1) en fonction de la longueur $z$ du déplacement de ce matériau de coeur (1), suivant l'expression :

$$v_{co}(z) = \frac{1}{\dfrac{1}{v_{co}(0)} \pm \sigma_{ap}\, N\, \dfrac{1}{v_T}\, \dfrac{d_{co}^{2}}{d_{e}^{2} - d_{i}^{2}}\, z}$$

$d_{co}$ étant le diamètre du coeur,
$d_e$ étant le diamètre externe du tube,
$d_i$ étant le diamètre interne du tube
$\sigma_{ap}$ étant la section efficace d'absorption de la pompe (P) du laser
$N$ étant la concentration des centres actifs du milieu laser
$v_T$ étant la vitesse de déplacement du tube capillaire (2) maintenue constante de manière à faire varier l'épaisseur de la gaine déposée sur le matériau de coeur de sorte que le diamètre $d_{cl}(z)$ de la gaine soit fonction de la longueur
$z$ du déplacement du matériau de coeur telle que :

$$d_{cl}(z) = \sqrt{d_{co}^{2} + \frac{v_T}{v_{co}(z)}\left(d_{e}^{2} - d_{i}^{2}\right)}$$

8. Procédé de gainage d'un milieu laser solide selon l'une des revendications 1 à 7, dans lequel on contrôle le déplacement horizontal relatif du matériau de coeur (1) et du tube capillaire (2) avant et durant l'étape c).

9. Procédé de gainage d'un milieu laser solide selon l'une des revendications 1 à 8, dans lequel le matériau de coeur (1) et le tube capillaire (2) s'étendent chacun et sont déplacés l'un par rapport à l'autre selon deux axes colinéaires non coaxiaux de manière à obtenir un milieu laser gainé dont le coeur est décentré par rapport à la gaine.

10. Procédé de gainage d'un milieu laser solide selon l'une des revendications 1 à 9, dans lequel on contrôle la puissance du laser de fusion du capillaire.

11. Procédé de gainage d'un milieu laser solide selon l'une des revendications 1 à 9, dans lequel on réalise la fusion du capillaire et le dépôt de la gaine dans une enceinte de confinement sous atmosphère contrôlée.

12. Dispositif de gainage d'un milieu laser solide comportant un matériau de coeur solide actif (C) revêtu d'une gaine (G), comportant:

   - un premier système de déplacement (3) sur lequel est fixé le matériau de coeur (1), ledit matériau de coeur (1) étant réalisé sous forme de barre allongée selon un axe de fibre et ledit premier système de déplacement (3) pouvant au moins se déplacer selon une direction colinéaire à l'axe du de fibre,
   - un deuxième système de déplacement (4) sur lequel est fixé un tube capillaire (2), le matériau de coeur (1) étant au moins partiellement inséré dans le tube capillaire (2) et ledit deuxième système de déplacement (4) pouvant au moins se déplacer selon une direction colinéaire à l'axe de fibre,
   - un système optique adapté pour focaliser un faisceau laser sur une zone annulaire de focalisation annulaire (6) de la gaine (G), afin de fondre le tube capillaire (2) autour du matériau de coeur (1), au niveau de ladite zone de focalisation et sans fondre ledit matériau de coeur,

   **caractérisé en ce qu'**il comporte un système d'ajustement des déplacements du premier (**3**) et du deuxième (**4**) système de déplacement à des vitesses différentes et variables afin de contrôler et faire varier l'épaisseur de la gaine (**G**) déposée.

13. Dispositif de gainage d'un milieu laser solide selon la revendication 12, **caractérisé en ce qu'**il comporte un système de refroidissement qui maintient le matériau de coeur (1) à une température inférieure à sa température de fusion.

14. Dispositif de gainage d'un milieu laser solide selon l'une des revendications 12 ou 13, **caractérisé en ce que** le système optique maintient la focalisation du faisceau laser sur une zone annulaire (6) située sur le matériau fondu à l'extrémité du tube capillaire (2).

15. Dispositif de gainage d'un milieu laser solide selon l'une des revendications 12 à 14, **caractérisé en ce que** ledit système d'ajustement ajuste les vitesses de déplacement du premier (3) et du deuxième (4) système de déplacement conformément au procédé de l'une des revendications 4 à 7.

16. Dispositif de gainage d'un milieu laser solide selon l'une des revendications 12 à 15, **caractérisé en ce que** le premier système de déplacement (3) et/ou le deuxième système de déplacement (4) est (sont) adapté(s) pour mesurer les déplacements et contrôler les vitesses de déplacement du matériau de coeur (1) et du tube capillaire (2).

17. Dispositif de gainage d'un milieu laser solide selon l'une des revendications 12 à 16, **caractérisé en ce que** le premier système de déplacement (3) et le deuxième système de déplacement (4) est (sont) adapté(s) pour déplacer le matériau de coeur (1) et le tube capillaire (2) selon deux axes colinéaires non coaxiaux de manière à obtenir un matériau laser solide dont le coeur est décentré par rapport à la gaine (G).

18. Dispositif de gainage d'un milieu laser solide selon l'une des revendications 12 à 17, **caractérisé en ce que** le système optique comporte un miroir parabolique qui coopère avec un dispositif d'orientation dudit miroir autour de deux axes de rotation perpendiculaires se coupant au sommet du miroir et tous deux perpendiculaires à l'axe du miroir.

19. Dispositif de gainage d'un milieu laser solide selon l'une des revendications 12 à 18, **caractérisé en ce que** le système optique comporte un laser de type $CO_2$ émettant un faisceau laser, et au moins un dispositif optique adapté pour orienter et pour focaliser annulairement le faisceau laser sur la zone de focalisation annulaire (6) de la gaine (G).

20. Dispositif de gainage d'un milieu laser solide selon l'une des revendications 12 à 19, **caractérisé en ce qu'**il comporte un système de contrôle de la puissance du faisceau laser.

21. Dispositif de gainage d'un milieu laser solide selon l'une des revendications 12 à 20, **caractérisé en ce qu'**il comporte une enceinte de confinement sous atmosphère contrôlée.

**Patentansprüche**

1. Verfahren zum Umhüllen eines festen Lasermediums, das ein festes, aktives Kernmaterial (C), welches mit einer Hülle (G) überzogen ist, umfasst, wonach:

a) das Kernmaterial (1), das in Form eines entlang einer Faserachse langgestreckten Stabes ausgebildet ist, wenigstens teilweise in eine Kapillarröhre eingeführt wird,

b) ein Laserstrahl (5) auf einen ringförmigen Fokussierbereich (6) der Kapillarröhre (2) fokussiert wird, und

c) wenn das geschmolzene Kapillarmaterial an dem Kernmaterial (1) haftet, das Kernmaterial (1) und die Kapillarröhre (2) in einer zu der Achse des Kerns (1) kollinearen Richtung bewegt werden,

**dadurch gekennzeichnet, dass**:

- die Fokussierung des Schrittes b) erfolgt, bis die Röhre um das Kernmaterial (1) in Höhe des Fokussierbereiches (6) zum Schmelzen gebracht wird und ohne das Kernmaterial (1) zu schmelzen, und
- das Bewegen des Schrittes c) mit unterschiedlichen Geschwindigkeiten erfolgt.

2. Verfahren zum Umhüllen eines festen Lasermediums nach Anspruch 1, wobei bei Schritt c) das Kernmaterial (1) auf einer Temperatur unterhalb seiner Schmelztemperatur gehalten wird.

3. Verfahren zum Umhüllen eines festen Lasermediums nach einem der Ansprüche 1 oder 2, wobei während des Schrittes c) die Fokussierung des Laserstrahls (5) an einem auf dem geschmolzenen Material am Ende der Kapillaröhre (2) gelegenen ringförmigen Bereich aufrechterhalten wird.

4. Verfahren zum Umhüllten eines festen Lasermediums nach einem der Ansprüche 1 bis 3, wobei die Dicke der auf dem Kernmaterial (1) abgeschiedenen Hülle kontrolliert wird, indem die Bewegungsgeschwindigkeiten des Kernmaterials (1) und der Kapillarröhre derart eingestellt werden, dass der Durchmesser $d_{cl}$ der Hülle so ist, dass:

$$d_{cl} = \sqrt{d_{co}^{2} + \frac{v_T}{v_{co}}\left(d_{e}^{2} - d_{i}^{2}\right)}$$

wobei $d_{co}$ der Durchmesser des Kerns ist,
wobei $v_T$ die Bewegungsgeschwindigkeit der Röhre ist,
wobei $v_{co}$ die Bewegungsgeschwindigkeit des Kerns ist,

wobei $d_e$ der Außendurchmesser der Röhre ist,
wobei $d_i$ der Innendurchmesser der Röhre ist.

5. Verfahren zum Umhüllen eines festen Lasermediums nach Anspruch 4, wobei die Bewegungsgeschwindigkeiten des Kernmaterials (1) und der Kapillarröhre (2) variiert werden, um die Dicke der auf dem Kernmaterial (1) abgeschiedenen Hülle zu variieren.

6. Verfahren zum Umhüllen eines festen Lasermediums nach Anspruch 5, wobei die Bewegungsgeschwindigkeit $v_T(z)$ der Kapillarröhre (2) in Abhängigkeit von der Länge z der Bewegung des Kernmaterials, gemäß dem Ausdruck variiert wird:

$$v_T(z) = v_T(0) \pm \sigma_{ap} N v_{co} \frac{d_{co}^{2}}{d_{e}^{2} - d_{i}^{2}} z$$

wobei $d_{co}$ der Durchmesser des Kerns ist,
wobei $d_e$ der Außendurchmesser der Röhre ist,
wobei $d_i$ der Innendurchmesser der Röhre ist,
wobei $\sigma_{ap}$ der wirksame Absorptionsquerschnitt der Pumpe (P) des Lasers ist, wobei N die Konzentration der aktiven Zentren des Lasermediums ist,
wobei $v_{co}$ die konstante Bewegungsgeschwindigkeit des Kernmaterials ist,
um die Dicke der auf dem Kernmaterial abgeschiedenen Hülle so zu variieren, dass der Durchmesser $d_{cl}(z)$ der Hülle von der Länge z der Bewegung des Kernmaterials (1) derart abhängig ist, dass:

$$d_{cl}(z) = \sqrt{d_{co}^{2} + \frac{v_T(z)}{v_{co}}\left(d_{e}^{2} - d_{i}^{2}\right)}$$

7. Verfahren zum Umhüllen eines festen Lasermediums nach Anspruch 5, wobei die Bewegungsgeschwindigkeit $v_{co}(z)$ des Kernmaterials (1) in Abhängigkeit von der Länge z der Bewegung dieses Kernmaterials (1) gemäß dem Ausdruck variiert wird:

$$v_{co}(z) = \frac{1}{\frac{1}{v_{co}(0)} \pm \sigma_{ap} N \frac{1}{v_T} \frac{d_{co}^{2}}{d_{e}^{2} - d_{i}^{2}} z}$$

wobei $d_{co}$ der Durchmesser des Kerns ist,
wobei $d_e$ der Außendurchmesser der Röhre ist,
wobei $d_i$ der Innendurchmesser der Röhre ist,

wobei $\sigma_{ap}$ der wirksame Absorptionsquerschnitt der Pumpe (P) des Lasers ist, wobei N die Konzentration der aktiven Zentren des Lasermediums ist, wobei $v_T$ die konstant gehaltene Bewegungsgeschwindigkeit der Kapillarröhre (2) ist, um die Dicke der auf dem Kernmaterial abgeschiedenen Hülle so zu variieren, dass der Durchmesser $d_{cl}(z)$ der Hülle von der Länge z der Bewegung des Kernmaterials derart abhängig ist, dass:

$$d_{cl}(z) = \sqrt{d_{co}^2 + \frac{v_T}{v_{co}(z)}\left(d_e^2 - d_i^2\right)}$$

8. Verfahren zum Umhüllen eines festen Lasermediums nach einem der Ansprüche 1 bis 7, wobei die horizontale Relativbewegung des Kernmaterials (1) und der Kapillarröhre (2) vor dem und während des Schritt(es) c) kontrolliert wird.

9. Verfahren zum Umhüllen eines festen Lasermediums nach einem der Ansprüche 1 bis 8, wobei das Kernmaterial (1) und die Kapillarröhre (2) sich jeweils entlang von zwei kollinearen, nicht koaxialen Achsen erstrecken und zueinander bewegt werden, um ein umhülltes Lasermedium zu erhalten, dessen Kern gegenüber der Hülle außermittig ist.

10. Verfahren zum Umhüllen eines festen Lasermediums nach einem der Ansprüche 1 bis 9, wobei die Leistung des Lasers zum Schmelzen der Kapillare kontrolliert wird.

11. Verfahren zum Umhüllen eines festen Lasermediums nach einem der Ansprüche 1 bis 9, wobei das Schmelzen der Kapillare und das Abscheiden der Hülle in einem Schutzbehälter unter kontrollierter Atmosphäre vollzogen werden.

12. Vorrichtung zum Umhüllen eines festen Lasermediums, das ein festes, aktives Kernmaterial (C), welches mit einer Hülle (G) überzogen ist, umfasst, umfassend:

   - ein erstes Bewegungssystem (3), an dem das Kernmaterial (1) befestigt ist, wobei das Kernmaterial (1) in Form eines entlang einer Faserachse langgestreckten Stabes ausgebildet ist und wobei das erste Bewegungssystem (3) sich wenigstens in einer zu der Faserachse kollinearen Richtung bewegen kann,
   - ein zweites Bewegungssystem (4), an dem eine Kapillarröhre (2) befestigt ist, wobei das Kernmaterial (1) wenigstens teilweise in die Kapillarröhre (2) eingefügt ist und wobei das zweite Bewegungssystem (4) sich wenigstens in einer zu der Faserachse kollinearen Richtung bewegen kann,
   - ein optisches System, das dafür ausgelegt, einen Laserstrahl auf einen ringförmigen Fokussierbereich (6) der Hülle (G) zu fokussieren, um die Kapillarröhre (2) um das Kernmaterial (1) in Höhe des Fokussierbereiches (6) zum Schmelzen zu bringen und ohne das Kernmaterial zu schmelzen,

   **dadurch gekennzeichnet, dass** sie ein System zum Einstellen der Bewegungen des ersten (3) und des zweiten (4) Bewegungssystems auf unterschiedliche und veränderliche Geschwindigkeiten umfasst, um die Dicke der abgeschiedenen Hülle (G) zu kontrollieren und zu variieren.

13. Vorrichtung zum Umhüllen eines festen Lasermediums nach Anspruch 12, **dadurch gekennzeichnet, dass** sie ein Kühlsystem umfasst, das das Kernmaterial (1) auf einer Temperatur unterhalb seiner Schmelztemperatur hält.

14. Vorrichtung zum Umhüllen eines festen Lasermediums nach einem der Ansprüche 12 oder 13, **dadurch gekennzeichnet, dass** das optische System die Fokussierung des Laserstrahls an einem auf dem geschmolzenen Material am Ende der Kapillaröhre (2) gelegenen ringförmigen Bereich (6) aufrechterhält.

15. Vorrichtung zum Umhüllen eines festen Lasermediums nach einem der Ansprüche 12 bis 14, **dadurch gekennzeichnet, dass** das Einstellungssystem die Bewegungsgeschwindigkeiten des ersten (3) und des zweiten (4) Bewegungssystems entsprechend dem Verfahren von einem der Ansprüche 4 bis 7 einstellt.

16. Vorrichtung zum Umhüllen eines festen Lasermediums nach einem der Ansprüche 12 bis 15, **dadurch gekennzeichnet, dass** das erste Bewegungssystem (3) und/oder das zweite Bewegungssystem (4) dafür ausgelegt ist (sind), die Bewegungen zu messen und die Bewegungsgeschwindigkeiten des Kernmaterials (1) und der Kapillarröhre (2) zu kontrollieren.

17. Vorrichtung zum Umhüllen eines festen Lasermediums nach einem der Ansprüche 12 bis 16, **dadurch gekennzeichnet, dass** das erste Bewegungssystem (3) und das zweite Bewegungssystem (4) dafür ausgelegt ist (sind), das Kernmaterial (1) und die Kapillarröhre (2) entlang von zwei kollinearen, nicht koaxialen Achsen zu bewegen, um ein festes Lasermaterial zu erhalten, dessen Kern gegenüber der Hülle (G) außermittig ist.

**18.** Vorrichtung zum Umhüllen eines festen Lasermediums nach einem der Ansprüche 12 bis 17, **dadurch gekennzeichnet, dass** das optische System einen Parabolspiegel umfasst, der mit einer Vorrichtung zum Ausrichten des Spiegels um zwei senkrechte Rotationsachsen, die sich im Scheitel des Spiegels schneiden und beide zur Achse des Spiegels senkrecht verlaufen, zusammenwirkt.

**19.** Vorrichtung zum Umhüllen eines festen Lasermediums nach einem der Ansprüche 12 bis 18, **dadurch gekennzeichnet, dass** das optische System einen Laser vom Typ $CO_2$, der einen Laserstrahl aussendet, sowie wenigstens eine optische Vorrichtung umfasst, die dafür ausgelegt ist, den Laserstrahl auf den ringförmigen Fokussierbereich (6) der Hülle (G) auszurichten und ringförmig zu fokussieren.

**20.** Vorrichtung zum Umhüllen eines festen Lasermediums nach einem der Ansprüche 12 bis 19, **dadurch gekennzeichnet, dass** sie ein System zum Kontrollieren der Leistung des Laserstrahls umfasst.

**21.** Vorrichtung zum Umhüllen eines festen Lasermediums nach einem der Ansprüche 12 bis 20, **dadurch gekennzeichnet, dass** sie einen Schutzbehälter unter kontrollierter Atmosphäre umfasst.

**Claims**

**1.** A method for sheathing a solid-state laser medium having an active solid core material (**C**) coated with a sheath (**G**) and according to which:

a) the core material (**1**), made in the form of an elongate bar along an axis, is at least partially introduced into a capillary tube,
b) a laser beam (**5**) is focused onto an annular focusing zone (**6**) of the capillary tube (**2**), and
c) when the molten capillary material adheres to the core material (**1**), said core material (**1**) and said capillary tube (**2**) are moved in a direction collinear with the axis of the core (**1**), **characterized in that**:

- the focusing zone of the step b) is done until said tube around the core material (**1**) melts in said focusing zone (**6**) but without melting said core material (**1**), and
- the movement of the step c) is done at different speeds.

**2.** The method for sheathing a solid-state laser medium according to claim 1, wherein during step c) the core material (**1**) is kept at a temperature below its melting temperature.

**3.** The method for sheathing a solid-state laser medium according to one of claims 1 or 2, wherein during step c) the focus of the laser beam (**5**) is kept on an annular zone situated on the molten material at the end of the capillary tube (**2**).

**4.** The method for sheathing a solid-state laser medium according to one of claims 1 to 3, wherein the thickness of the sheath deposited on the core material (**1**) is advantageously monitored by adjusting the movement speeds of the core material (**1**) and the capillary tube so that the diameter $d_{cl}$ of the sheath is such that:

$$d_{cl} = \sqrt{d_{co}^{2} + \frac{v_T}{v_{co}}\left(d_e^{2} - d_i^{2}\right)}$$

$d_{co}$ being the diameter of the core,
$v_T$ being the movement speed of the tube,
$v_{co}$ being the movement speed of the core,
$d_e$ being the outer diameter of the tube,
$d_i$ being the inner diameter of the tube.

**5.** The method for sheathing a solid-state laser medium according to claim 4, wherein the movement speeds of the core material (**1**) and the capillary tube (**2**) are made to vary so as to vary the thickness of the sheath deposited on the core material (**1**).

**6.** The method for sheathing a solid-state laser medium according to claim 5, wherein the movement speed $v_T(z)$ of the capillary tube (**2**) is made to vary as a function of the length $z$ of the movement of the core material, according to the expression:

$$v_T(z) = v_T(0) \pm \sigma_{ap} N v_{co} \frac{d_{co}^{2}}{d_e^{2} - d_i^{2}} z$$

$d_{co}$ being the diameter of the core,
$d_e$ being the outer diameter of the tube,
$d_i$ being the inner diameter of the tube,
$\sigma_{ap}$ being the effective absorption section of the laser pump (**P**), $N$ being the concentration of the active centers of the laser medium,
$v_{co}$ being the constant movement speed of the core material,
so as to vary the thickness of the sheath deposited on the core material so that the diameter $d_{cl}(z)$ of the sheath is a function of the movement length $z$ of the core material such that:

$$d_{cl}(z) = \sqrt{d_{co}^2 + \frac{v_T(z)}{v_{co}}\left(d_e^2 - d_i^2\right)}$$

7. The method for sheathing a solid-state laser medium according to claim 5, wherein the movement speed $v_{co}(z)$ of the core material (**1**) is made to vary as a function of the movement length $z$ of this core material (**1**), according to the expression:

$$v_{co}(z) = \cfrac{1}{\cfrac{1}{v_{co}(0)} \pm \sigma_{ap} N \cfrac{1}{v_T} \cfrac{d_{co}^2}{d_e^2 - d_i^2} z}$$

$d_{co}$ being the diameter of the core,
$d_e$ being the outer diameter of the tube,
$d_i$ being the inner diameter of the tube,
$\sigma_{ap}$ being the effective absorption section of the laser pump (**P**),
$N$ being the concentration of the active centers of the laser medium,
$v_T$ being the movement speed of the capillary tube kept constant so as to vary the thickness of the sheath deposited on the core material so that the diameter $d_{cl}(z)$ of the sheath is a function of the movement length $z$ of the core material such that:

$$d_{cl}(z) = \sqrt{d_{co}^2 + \frac{v_T}{v_{co}(z)}\left(d_e^2 - d_i^2\right)}$$

8. The method for sheathing a solid-state laser medium according to one of claims 1 to 7, wherein the relative horizontal movement of the core material and the capillary tube are monitored during step c).

9. The method for sheathing a solid-state laser medium according to one of claims 1 to 8, wherein the core material and the capillary tube each extend and are moved relative to each other along two non-coaxial collinear axes so as to obtain a solid-state laser medium whereof the core is off-center relative to the sheath.

10. The method for sheathing a solid-state laser medium according to one of claims 1 to 9, wherein the power of the melting laser of the capillary is monitored.

11. The method for sheathing a solid-state laser medium according to one of claims 1 to 9, wherein the capillary is melted and the sheath is deposited in a confinement enclosure in a controlled atmosphere.

12. A device for sheathing a solid-state laser medium having an active solid-state core material (**C**) coated with a sheath (**G**), including:

   - a first movement system (**3**) on which the core material (**1**) is fastened, said core material (**1**) being made in the form of an elongate bar along an axis and said first movement system (**3**) being able at least to move in a direction collinear to the core axis,
   - a second movement system (**4**) on which a capillary tube is fastened (**2**), the core material being at least partially inserted into the capillary tube (**2**) and said second movement system (**4**) at least being able to move in a direction collinear to the fiber axis,
   - an optical system adapted to focus a laser beam on an annular zone for annular focusing (**6**) of the sheath (**G**), so as to melt the capillary tube (**2**) around the core material (**1**), at said focusing zone and without melting said core material **characterized in that** it has a system for adjusting the movements of the first and second movement systems to different and variable speeds to monitor and vary the deposited sheath thickness.

13. The device for sheathing a solid-state laser medium according to claim 12, **characterized in that** it has a cooling system that keeps the core material (**1**) at a temperature below its melting temperature.

14. The device for sheathing a solid-state laser medium according to claim 12 or 13, **characterized in that** the optical system keeps the focus of the laser beam on an annular zone (**6**) situated on the molten material at the end of the capillary tube (**2**).

15. The device for sheathing a solid-state laser medium according to claim 12 to 14, **characterized in that** said adjustment system adjusts the movement speeds of the first (**3**) and second (**4**) movement systems according to one of claims 4 to 7.

16. The device for sheathing a solid-state laser medium according to claim 12 to 15, **characterized in that** the first movement system (**3**) and/or the second movement system (**4**) is (are) adapted to measure the movements and monitor the movement speeds of the core material (**1**) and the capillary tube (**2**).

17. The device for sheathing a solid-state laser medium according to claim 12 to 16, **characterized in that** the first movement system (**3**) and the second movement system (**4**) is (are) adapted to move the core material (**1**) and the capillary tube (**2**) along two non-coaxial collinear axes so as to obtain a solid-state laser material whereof the core is off-center relative to the sheath (**G**).

18. The device for sheathing a solid-state laser medium according to claim 12 to 17, **characterized in that** the optical system has a parabolic mirror that cooperates with a device for orienting said mirror around two perpendicular axes of rotation intersecting at the apex of the mirror and both perpendicular to the axis of the mirror.

19. The device for sheathing a solid-state laser medium according to claim 12 to 18, **characterized in that** the optical system has a $CO_2$-type laser emitting a laser beam, and one optical device adapted to orient and annularly focus the laser beam on the annular focusing zone of the sheath.

20. The device for sheathing a solid- state laser medium according to claim 12 to 19, **characterized in that** it has a system for monitoring the power of the laser beam.

21. The device for sheathing a solid-state laser medium according to claim 12 to 20, **characterized in that** it has a controlled atmosphere confinement enclosure.

FIG.1

FIG.2

FIG.3

FIG.4A

FIG.4B

FIG.5

# EP 2 379 459 B1

## RÉFÉRENCES CITÉES DANS LA DESCRIPTION

**Documents brevets cités dans la description**

- US 2006110122 A
- US 3656925 A